# EUROPEAN PATENT SPECIFICATION

(11) **EP 1 262 383 B1**
(45) Date of publication and mention of the grant of the patent: **01.09.2004**
(21) Application number: 02253207.1
(22) Date of filing: 08.05.2002
(51) Int. Cl.: B60R 22/10, B60R 22/28, B60N 2/28, F16F 7/14, F16F 7/12

(54) **Connector for child safety seat**
Verbindungselement für Kindsicherheitssitz
Connecteur pour siège de sécurité pour enfants

(30) Priority: 01.06.2001 GB 0113280
(43) Date of publication of application: 04.12.2002
(73) Proprietor: BRITAX RÖMER Kindersicherheit GmbH, D-89024 Ulm (DE)
(72) Inventor: Wetter, Hermann, 89075 Ulm (DE); Lang, Heinz-Jürgen, 89275 Elchingen (DE)
(74) Representative: Hollinghurst, Antony

(56) References cited:
- EP-A- 0 927 659
- DE-A- 2 606 234
- FR-A- 1 283 315
- FR-A- 2 771 464
- US-A- 3 482 872
- US-A- 5 468 045
- US-A- 5 630 645

## Description

This invention relates to a child safety seat including a tether strap and connector combination connecting an upper part of the backrest of a child safety seat and an anchorage location in a vehicle, wherein the connector has a first connector part adapted to be secured to the vehicle and a second connector part adapted to releasably engage with the first connector part, and the tether strap connects the second connector part to the backrest.

A child safety seat having a tether strap and connector combination of this type is disclosed in US-A-5630645.

The provision of a child safety seat with a tether of the type described above has proved successful in reducing the range of forward movement of the head of an occupant of a forward-facing seat in the event of an accident. However, it has also had the result of increasing the maximum acceleration to which the occupant's head is subject under these conditions.

According to one aspect of the invention, in tether strap and connector combination of the type described above, the second connector part is attached to the tether strap by energy-absorbing means.

US 5468045 describes a child safety seat with a back rest panel attached to a vehicle via an elastic diaphragm with the purpose of reducing the relative deceleration of a seat occupant's head during a collision. Air is sacked into the diaphragm during its forward movement and released through a small opening to avoid rapid return of the back rest.

Several energy-absorbers for use with a vehicle seat belt are disclosed in WO-A-9737876. One of these comprises a wire wound in a helix round an elongate rod. An applied load tends to straighten the helix.

Embodiments of the invention will now be described, by way of example, with reference to the accompanying drawings, in which:
Figure 1 is a side view of a child safety seat in accordance with the invention in a forward-facing position on a vehicle seat;
Figure 2 is a perspective view of a first tether strap connector for use with the child safety seat shown in Figure 1;
Figure 3 is a perspective view of a second tether strap connector for use with the child safety seat shown in Figure 1; and
Figure 4 is a perspective view of a third tether strap connector for use with the child safety seat shown in Figure 1.

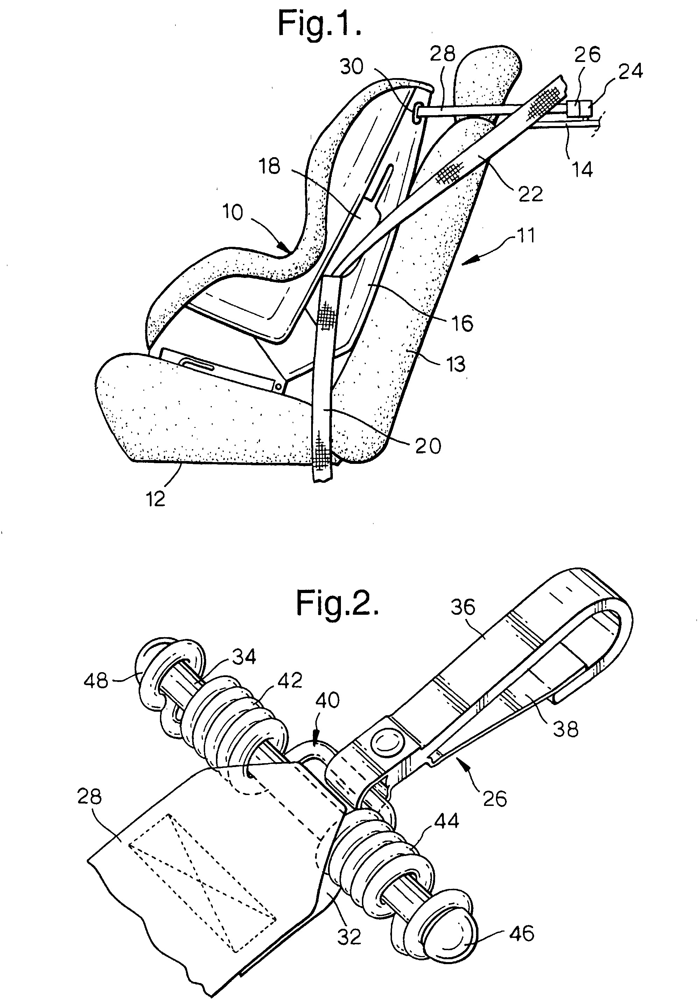

Figure 1 shows a child safety seat 10 resting on a vehicle seat 11 having a seat portion 12 and a backrest 13. A parcel shelf 14 is located behind the upper part of the backrest 13. The back of the child safety seat 10 includes a pair of projecting beams 16 (only one of which is visible in the drawings) having an opening 18 for the lap strap 20 and shoulder strap 22 of a vehicle seat belt, by means of which the child safety seat 10 is secured in place on the vehicle seat 12.

A two-part connector has a first part 24 secured to the parcel shelf 14. the second part 26 of the connector is attached to one end of a tether strap 28, the other end of which is secured to a slot 30 in the beam 16. The second part 26 of the connector may comprise a hook which engages in a slot in the first part 24, as described in CA-1301435.

Figure 2 shows the second part of the two-part connector in more detail. The rear end of the tether strap 28 has a loop 32 sewn therein. The loop 32 is positioned at a mid-point on a rigid metal rod 34. The second connector part 26 also has a hook 36 for engaging in a slot in the first connector part 24 (not shown in Figure 2) together with a leaf spring retainer 38 to hold the hook in its engaged position. The hook 36 is secured to the middle region 40 of a U-shaped member 40 which is formed from resilient steel wire or the like. Each limb 42, 44 of the U-shaped member is wound in a helix on a respective end of the rod 34. The loop 32 in the tether strap is located between the two helical limbs 42, 44. End caps 46 and 48 prevent the two helical limbs 42, 44 from sliding off the rod 34.

If the tether strap 28 is subject to a sudden jerk, for example in an accident, the wire of the helical limbs 42, 44 tend to straighten out, thus reducing the deceleration of the head and upper body of a child occupant of the child safety seat 10.

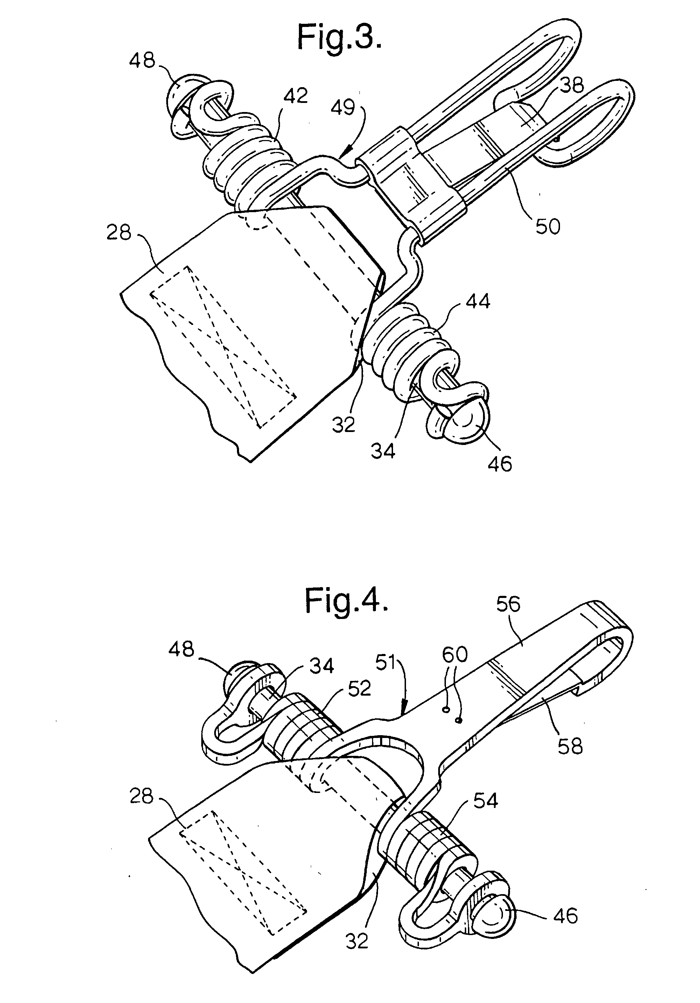

Figure 3 shows a modification to the second connector part 26 shown in Figure 2. The central portion of a wire U-shaped member 49 is shaped to form an integral hook 50. Otherwise, the connector part is as described with reference to Figure 2.

Figure 4 illustrates a further variant, which the wire U-shaped member is replaced by a U-shaped member 51 formed from sheet material. As with the embodiment of Figure 3, the U-shaped member has two helical limbs 52 and 54, and a central part comprising an integrally formed hook 56. The hook 56 is provided with a leaf spring closure 58 secured by rivets 60.

The invention is also applicable to anchorages of the type described in EP-A- 1238852 (Art. 54 (3) EPC document).

## Claims

1. A child safety seat including a tether strap and connector combination connecting an upper part (30) of the backrest of the child safety seat and an anchorage location in a vehicle, wherein the connector has a first connector part (24) adapted to be secured to the vehicle and a second connector part (26) adapted to releasably engage with the first connector part (24), and the tether strap (28) connects the second connector part (26) to the backrest, **characterised in that** the second connector part (26) is attached to the tether strap (28) by energy-absorbing means (40, 49, 51).

2. A child safety seat including a tether strap and connector combination according to claim 1, wherein the energy-absorbing means comprises a curved deformable element (40, 49, 51) arranged so as to at least partially straighten when a load is applied thereto.

3. A child safety seat including a tether strap and connector combination according to claim 2, wherein a rod (34) extends through a loop (32) formed in the tether strap (28), the curved deformable element comprises a U-shaped deformable member (40, 49, 51) having one limb formed in a first helix (42, 52) round said rod (34) on one side of the loop (32) and another limb formed in a second helix (44, 54) round the rod (34) on the other side of the loop (32), and the second connector part (26) comprises a coupling formation (36, 50, 56) secured to the U-shaped member between the first helix (42, 52) and the second helix (44, 54) and adapted to engage with the first connector part (24).

4. A child safety seat including a tether strap and connector combination according to claim 3, wherein the coupling formation (50, 56) is integral with the U-shaped member.

5. A child safety seat including a tether strap and connector combination according to claim 3 or 4, wherein the U-shaped member (40, 49) is formed from wire.

6. A child safety seat including a tether strap and connector combination according to claim 3 or 4, wherein the U-shaped member (51) is formed from sheet material.

7. A child safety seat including a tether strap and connector combination according to any preceding claim, wherein the second connector part (26) comprises a hook (36, 50, 56) adapted to engage in an opening in the first connector part (24).

8. A child safety seat for use in a vehicle comprising a seat portion (12), a backrest (13), and tether strap and connector combination according to any preceding claim, the tether strap (28) being secured to an anchorage location adjacent to an upper part of said backrest (13).

## Patentansprüche

1. Kindersicherheitssitz mit einer Haltegurt- und Verbinderanordnung zum Verbinden eines oberen Teils (30) einer Rückenlehne des Kindersicherheitssitzes mit einer Verankerungsstelle in einem Kraftfahrzeug, wobei der Verbinder einen ersten Verbinderteil (24) zur Anbringung an dem Fahrzeug und einem zweiten Verbinderteil (26) zum lösbaren Zusammenwirken mit dem ersten Verbinderteil (24) aufweist, und der Haltegurt (28) den zweiten Verbinderteil (26) mit der Rückenlehne verbindet, **dadurch gekennzeichnet, daß** der zweite Verbinderteil (26) an dem Haltegurt (28) über eine Energie absorbierende Einrichtung (40, 49, 51) angebracht ist.

2. Anordnung nach Anspruch 1, bei der die Energie absorbierende Einrichtung ein gekrümmtes verformbares Element (40, 49, 51) aufweist, die derart ausgebildet ist, daß sie sich zumindest teilweise streckt, wenn eine Last auf sie einwirkt.

3. Anordnung nach Anspruch 2, bei der ein Stab (34) eine in dem Haltegurt (28) gebildete Schlaufe (32) durchsetzt, wobei das gekrümmte verformbare Element ein U-förmiges verformbares Element (40, 49, 51) aufweist, von dem ein Glied zu einer ersten Wendel (42, 52) um den Stab (34) herum auf einer Seite der Schlaufe (32) ausgebildet und ein weiteres Glied zu einer zweiten Wendel (44, 54) um den Stab (34) herum auf der anderen Seite der Schlaufe (32) ausgebildet ist, und der zweite Verbinderteil (26) ein Kupplungsgebilde (36, 50, 56) aufweist, welches an dem U-förmigen Element zwischen der ersten Wendel (42, 52) und der zweiten Wendel (44, 54) befestigt und dazu ausgebildet ist, mit dem ersten Verbinderteil (24) zusammenzuwirken.

4. Anordnung nach Anspruch 3, bei der das Kupplungsgebilde (50, 56) einstükkig mit dem U-förmigen Element ausgebildet ist.

5. Anordnung nach Anspruch 3 oder 4, bei der das U-förmige Element (40, 49) aus einem Draht gebildet ist.

6. Anordnung nach Anspruch 3 oder 4, bei der das U-förmige Element (51) aus Flachmaterial gebildet ist.

7. Anordnung nach einem vorhergehenden Anspruch, bei der der zweite Verbinderteil (26) einen Haken (36, 50, 56) aufweist, ausgebildet für das Eingreifen in eine in dem ersten Verbinderteil (24) befindliche Öffnung.

8. Kindersicherheitssitz zur Verwendung in einem Fahrzeug, umfassend ein Sitzteil (12), eine Rückenlehne (13) und eine Haltegurt- und Verbinderanordnung nach einem vorhergehenden Anspruch, wobei der Haltegurt (28) an einer Verankerungsstelle benachbart zu einem oberen Teil der Rückenlehne (13) befestigt ist.

## Revendications

1. Siège de sécurité pour enfant incluant une combinaison de sangle d'attache et de connecteur connectant une partie supérieure (30) du dossier siège de sécurité pour enfant et un emplacement d'ancrage dans un véhicule, le connecteur ayant une première partie de connecteur (24) adaptée pour être fixée sur le véhicule, et une seconde partie de connecteur (26) adaptée pour venir en prise de manière libérable avec la première partie de connecteur (24), et la sangle d'attache (28) connectant la seconde partie de connecteur (26) au dossier, **caractérisée en ce que** la seconde partie de connecteur (26) est fixée sur la sangle d'attache (28) par l'intermédiaire de moyens d'absorption d'énergie (40, 49, 51).

2. Siège de sécurité pour enfant incluant une combinaison de sangle d'attache et de connecteur selon la revendication 1, dans lequel les moyens d'absorption d'énergie comportent un élément déformable incurvé (40, 49, 51) agencé de manière à être au moins partiellement raidi lorsqu'une charge est appliquée à celui-ci.

3. Siège de sécurité pour enfant comportant une combinaison de sangle d'attache et de connecteur selon la revendication 2, dans lequel une tige (34) s'étend à travers une boucle (32) formée dans la sangle d'attache (28), l'élément déformable incurvé comporte un élément déformable en forme de U (40, 49, 51) ayant un membre formé en une première hélice (42, 52) autour de ladite tige (34) sur un premier côté de la boucle (32), et un autre membre formé en une seconde hélice (44, 54) autour de la tige (34) de l'autre côté de la boucle (32), et la seconde partie de connecteur (26) comporte une formation de couplage (36, 50, 56) fixée sur l'élément en forme de U entre la première hélice (42, 52) et la seconde hélice (44, 54), et adaptée pour venir en prise avec la première partie de connecteur (24).

4. Siège de sécurité pour enfant comportant une combinaison de sangle d'attache et de connecteur selon la revendication 3, dans laquelle la formation de couplage (50, 56) est en un seul bloc avec l'élément en forme de U.

5. Siège de sécurité pour enfant comportant une combinaison de sangle d'attache et de connecteur selon la revendication 3 ou 4, dans lequel l'élément en forme de U (40, 49) est formé à partir d'un fil métallique.

6. Siège de sécurité pour enfant comportant une combinaison de sangle d'attache et de connecteur selon la revendication 3 ou 4, dans lequel l'élément en forme de U (51) est formé à partir d'un matériau en feuille.

7. Siège de sécurité pour enfant comportant une combinaison de sangle d'attache et de connecteur selon l'une quelconque des revendications précédentes, dans lequel la seconde partie de connecteur (26) comporte une crochet (36, 50, 56) adapté pour venir en prise dans une ouverture située dans la première partie de connecteur (24).

8. Siège de sécurité pour enfant destiné à être utilisé dans un véhicule comportant une partie d'assise (12), un dossier (13), et une combinaison de sangle d'attache et de connecteur selon l'une quelconque des revendications précédentes, la sangle d'attache (28) étant fixée sur un emplacement d'ancrage adjacent à une partie supérieure dudit dossier (13).
